# EUROPEAN PATENT APPLICATION

(11) **EP 2 730 973 A1**
(43) Date of publication of application: **14.05.2014**
(21) Application number: 12192052.4
(22) Date of filing: 09.11.2012
(51) Int. Cl.: G02F 1/155, G02F 1/15

(54) **Fixed image display device and method of manufacturing the same**

(71) Applicant: Acreo Swedish ICT AB, 164 40 Kista (SE)
(72) Inventor: Malmström, Anna, 603 51 Norrköping (SE)
(74) Representative: Haag, Malina Anna

(57) **Abstract**

A fixed image display device (1), having an opaque insulating layer (10), a continuous electrolyte layer (9) behind said insulating layer, a pixilated electrochemically active and electrochromic layer (5) between the electrolyte layer and the insulating layer, a pixilated electronically conductive counter electrode layer (5') between the electrolyte layer and the insulating layer. The electrochromic layer (5) and the counter electrode layer (5') have a lateral arrangement, and are in ionic contact with each other. Moreover, said insulating layer comprises passages (16) having an electronic conductor (15). At least one continuous motif electrode segment (14) arranged behind the insulating layer (10), and electronically connected to at least two pixel elements of said electrochromic layer (5) via the electronic conductors (15); and at least one continuous background electrode segment (17) arranged behind the insulating layer (10), and electronically connected to at least two pixel elements of said counter electrode layer (5') via electronic conductors (15).

## Description

### Field of the Invention

The present invention relates to electrochemically active organic fixed image display devices and the manufacturing of such devices. In particular, the present invention relates to printable, electrochemically active fixed image display devices based on organic electrochromic and electrochemically active materials, which display device is arranged to display, when activated, a predetermined fixed image in a display area of the display device, wherein the fixed image comprises at least one motif area and at least one background area which areas in combination define the fixed image visually perceived by the end user observing the display device.

### Background Art

In the field of printed electronics, comprising electrochemically active thin film devices based on organic electronics, it is known to provide flexible displays and structures by means of common printing techniques and equipment, such as screen printing, flexography, gravure, offset lithography and inkjet printing.

One type of flexible display is the fixed image display device, which upon activation is arranged to display one single fixed image. The image is fixed, hence, the fixed image display device is not arranged to display different, or moving, images as in the case of dynamic image display devices which comprise means or active control devices for addressing or switching separated portions of the dynamic image display device in order to change the displayed image or to display a different image. Instead, in the fixed image display device, the predetermined fixed image may be switched on or off, e.g. by application of an activation voltage between a pixel electrode and a counter electrode.

Compared to dynamic display devices the architecture of the electrochemically active and organic fixed image thin film display device is considerably simpler and allows for more cost effective manufacturing. In particular, the image to be displayed by the fixed image display device may be provided by e.g. patterning the active pixel electrode, or the electrolyte, into the desired fixed image. Hence, the fixed image is integrated into the device architecture of the fixed image display device, such that the fixed image is displayed upon activation of the device.

One example of a fixed image display device is illustrated and described in relation to Figs. 16A to 16D in WO 2010/099147. As illustrated in Fig. 16B, the fixed image to be displayed by the display device is defined by providing an opacifier layer which is arranged to hide some details of the display device for the end user, such as a viewer or an observer of the display. In more detail, according to one example, the opacifier layer comprises a hole (e.g. hole 1631) which exactly matches the image to be presented to the end user. Hence, the fixed image to be displayed is defined by the gap in the opacifier layer. According to a second example, the opacifier layer comprises a hole (e.g. hole 1628) which is larger than the image shown to the end user. Instead, a chromic layer, illustrated in Fig. 16C, is patterned into, or given the same shape as, the fixed image shown to the end user (e.g. chromic layer 1606) since the opacifier layer in front of it does not create the image.

However, a drawback with known fixed image display devices based on layered electrochemically active and organic materials, is that the fixed image of the fixed image display device may be observed by the end user even before the application of an activation voltage. For example, differences in color, and/or reflection, between the opacifier layer and the chromic layer in the first example above, or between the chromic layer and the background layer in the second example above, may typically be detected by the end user. Hence, in other words, the fixed image of the fixed image display device is not truly hidden when the fixed image display device is turned off, or in its non-active state. In addition, high alignment requirements for manufacturing known fixed image display devices entail expensive and inefficient manufacturing processes involving e.g. exact matching of the opacifier layer in relation to the chromic layer.

The most apparent solutions to these problems would be to select a different material for the opacifier, or background layer, such that the difference in visual appearance between the chromic layer and the opacifier, or background layer, is minimized when the display is in a non-active state. Furthermore, known fixed image display devices based on layered electrochemically active and organic material normally suffer from nonuniform switching of the fixed image, as the switch of the electrochromic material normally starts at one end of the material and progresses throughout the remaining electrochromic material until the whole volume is switched.

### Summary of the Invention

In view of the above-mentioned and other drawbacks of the prior arts, a general object of the present invention is to provide an improved flexible fixed image display device and an improved method for manufacturing a fixed image display with respect to e.g. the ability to hide the image of the display device in the off-state of the display. These and other objects are met by the subject matters provided in the independent claims. Preferred embodiments of the invention are presented in the dependent claims.

According to a first aspect thereof, the present invention relates to a flexible fixed image display device, arranged to display, when activated, a predetermined fixed image in a display area, the fixed image comprising at least one motif area and at least one background area. The display device comprises an insulating layer, which preferably is opaque; an electrolyte layer comprising solidified electrolyte, which electrolyte layer is continuous throughout the display area and arranged, in a viewing direction, in front of said insulating layer; an electrochromic layer comprising electrochromic and electrochemically active organic polymer material being switchable between different visually detectable coloring states, and being arranged, in a viewing direction, between the electrolyte layer and the insulating layer; a counter electrode layer comprising electronically conductive material, and being arranged, in a viewing direction, between the electrolyte layer and the insulating layer, which electrochromic layer and counter electrode layer are arranged in a lateral configuration, and in ionic contact with each other via said electrolyte layer.

According to one embodiment the color of the electrochromic layer and the color of the counter electrode layer are perceived as the same or substantially the same, when the materials are in their respective non-active state. According to one example the electrochromic layer comprises or consists of a first material, and the counter electrode layer comprises or consists of a second material, wherein the first and second materials have different compositions; but where the color of these layers, when viewed as arranged in the display, are perceived as the same or substantially the same, at least when the materials are in their respective non-active state. I.e. the electrochromic layer may be arranged of a material having a different composition, compared to the material used for the counter electrode layer. According to an alternative example the electrochromic layer and the counter electrode layer comprises or consists of the same material. I.e. the electrochromic layer and the counter electrode layer is arranged of the same material, i.e. both layers may have the same composition.

Further, the electrochromic layer and the counter electrode layer are each arranged in a plurality of pixel elements having a matrix configuration, which pixel elements are spatially separated from each other and in ionic contact with the electrolyte layer, the insulating layer is preferably opaque and provided with passages, each passage being provided with an electronic conductor.

The fixed image display device further comprises at least one continuous motif electrode segment arranged, in the viewing direction, behind the insulating layer, and being electronically connected to at least two pixel elements of the electrochromic layer via respective ones of said electronic conductors; at least one continuous background electrode segment arranged, in the viewing direction, behind the insulating layer, and being electronically connected to at least two pixel elements of said counter electrode layer via respective ones of said electronic conductors; and, upon application of an electric potential difference (V) between the electrochromic layer and the counter electrode layer, the at least two pixel elements of the electrochromic layer switch coloring state.

According to one example one, more or all dimension(s) of the pixels of the electrochromic layer is equal to the corresponding dimension(s) of the pixels of the counter electrode layer. I.e. the thickness of the pixels of the counter electrode layer may or may not be equal to the thickness of the electrochromic layer. Additionally or alternatively, the height of the pixels of the counter electrode layer may or may not be equal to the height of the electrochromic layer. Additionally or alternatively, the width of the pixels of the counter electrode layer may or may not be equal to the width of the electrochromic layer.

According to a second aspect thereof, the present invention relates to the manufacturing of a flexible fixed image display device, arranged to display, when activated, a predetermined fixed image in a display area, the fixed image comprising at least one motif area and at least one background area, the method comprises the steps of, in arbitrary order:
- providing an insulating layer, which preferably is opaque.
- arranging an electrochromic layer on a first side of the insulating layer, which electrochromic layer comprises electrochromic an electrochemically active organic polymer material being switchable between different visually detectable states.
- arranging a counter electrode layer on the first side of the insulating layer to the side of and electronically separated from said electrochromic layer, which counter electrode layer comprises electronically conductive material.
- arranging an electrolyte layer on the first side of the insulating layer such that the electrolyte layer is continuous throughout the display area and such that said electrochromic layer and the counter electrode layer are fully or partly sandwiched between the electrolyte and said insulating layer.

Specifically, the step of arranging the electrochromic layer and the step of arranging the counter electrode layer further comprises arranging the electrochromic layer and the counter electrode layer, respectively, in a plurality of pixel elements, which pixel elements are spatially separated from each other. In other words, the electrochromic layer is arranged in a plurality of pixel elements which are spatially separated from each other. Further, the counter electrode layer may also be arranged in a plurality of pixel elements which are spatially separated from each other.

Additionally, the step of providing the insulating layer, further comprises arranging passages in said insulating layer and arranging an electronic conductor in the passages.

Moreover, the method of manufacturing said display device further comprises the steps of:
- arranging on a second side of the insulating layer, which second side is opposite to the first side of the insulating layer, at least one motif electrode segment and at least one background electrode segment, which motif and background segments are arranged electronically separated from each other.
- providing electronic contact between one of said at least one motif electrode segment and at least two pixel elements of said electrochromic layer via at least two of said electronic conductors (16) which are arranged in said passages of said insulating layer.
- providing electronic contact between one of the at least one background electrode segment and at least two pixel elements of the counter electrode layer via at least two of the electronic conductors, which are arranged in the passages of the insulating layer.

The steps above may be preformed in arbitrary order i.e. in any suitable order. For example, if one starts with providing the substrate, the motif electrode segment(s) may be provided before the background electrode segment(s) or vice versa. Further, motif and background electrode segments may be provided alternately, e.g. first a whole, or a portion of, one or more motif electrode segment(s) is/are provided, thereafter a whole, or a portion of, one or more background electrode segment(s) is/are provided, and still thereafter optionally a whole, or a portion of, one or more motif electrode segment(s) is/are provided.

Additionally, the whole, or a portion of, the electrochromic layer may be provided before the whole, or a portion of, the counter electrode layer is provided.

The front and backside of the substrate or the insulating layer may also be printed alternatively, e.g. first the whole, or a portion of, the counter electrode layer may be printed, thereafter the whole, or a portion of, one or more of the background electrode segment(s) is/are printed, and still thereafter the whole, or a portion of, the electrochromic layer is printed.

Moreover, the electrolyte layer may be provided e.g. either before or after the motif and background electrode segments are provided. It may also be provided after one of the motif and background electrode segment(s) is/are provided; but before the other of the motif and background electrode segment(s) is/are provided

The above examples does not represent a complete list of the order by which the method steps may be preformed, but gives an indication of the freedom of choice at the manufacturing.

The invention is based on the realization of the inventors that an improved fixed image display device is realized by providing a set of pixel elements all being perceived as having the same or substantially the same color and reflection when the fixed image display device is not activated, wherein the set of pixel elements comprises both the motif pixel elements and the background pixel elements. The motif pixel elements are activated and arranged to switch colour by application of a potential difference between the hidden motif electrode layer, consisting of the motif electrode segment(s), and the hidden background electrode layer, consisting of the background electrode segment(s), which two layers are arranged behind an opaque insulating layer arranged behind the pixel elements. Hence, the predetermined fixed image to be displayed upon activation of the display device, and which is determined by the hidden electrode segments, cannot, or can essentially not, be observed by the end user when the display is in a non active state.

Hence, the present invention advantageously provides a fixed imaged display device and a fixed image display architecture which considerably more efficiently conceals, or hides, the fixed image to be displayed when the fixed image display device is not in an active state, or on-state. For example, a viewer observing the display device from a normal viewing distance, will perceive a uniform display area having an essentially uniform color throughout the complete display area. The appropriate length of the normal viewing distance is depending on the size, or area, of each individual pixel element, and there center to center distance, in the same way as for conventional displays.

Moreover, method of manufacturing provides an improved fixed image display device having improved display image properties and switch characteristics. Furthermore, improved concealing of the predetermined fixed image to be displayed upon activation of display device, and which is determined by the hidden motif and background electrode layers, is advantageously provided. Additionally, the manufacturing process according to the present aspect of the present invention allows for efficient and scalable manufacturing using conventional printing techniques, such as low-cost printing described above.

Furthermore, the fixed image display device architecture according to the present invention allows for efficient and low cost manufacturing using conventional printing techniques. The motif electrode layer, comprising one or more motif electrode segments, may e.g. be arranged as a figurative motif, or as one or more graphical symbols, such as a set of lines, squares, triangles, circles etc. It may also be arranged as a figurative symbol, such as a flower or trademark, or as one or several letters in any alphabet, or characters, or as a signature, or as a combination of the above. The shape of the electrode is not limited to the examples mentioned above, but is free to be given any shape.

Furthermore, the fixed image display device of the present invention advantageously enables efficient manufacturing using conventional printing techniques and equipments, such as screen printing, flexography, gravure, offset lithography and inkjet printing. In particular, low-cost printing which may be defined as manufacturing using conventional printing methods in normal regular ambient conditions, such as room temperature, is advantageously realized. Low-cost printing may e.g. comprise manufacturing in a temperature interval around room temperature of 15 to 30 degrees Celsius, such as between 10 and 60 degrees Celsius, or between 10 and 35 degrees Celsius. In other words, the arrangement or printing of one or several of the different layers of the display device is performed in a temperature interval around room temperature. The manufacturing may further comprise thermal drying processes involving higher temperatures, e.g. to shorten the drying time, solidifying and/or curing layers and segments of the fixed image display device, such as the electrolyte layer. In addition, low-cost printing manufacturing may further advantageously entail processing steps, such as arrangement or printing of one or several of the different layers in normal pressure conditions, such as about 100 kPa or 1 atm, or in pressure conditions between 80 and 120 kPa, and in ambient air conditions. Hence, in low-cost printing manufacturing, expensive and cumbersome equipment and/or manufacturing conditions, such as vacuum and/or clean room facilities, or similar facilities, are not required or may be significantly reduced.

In general, the surface of the insulating layer may or may not be provided with passages throughout; or the passages may be located to only a portion of the insulating layer, which portion may be centered on the insulating layer or arranged off center.

Further, the surface of the insulating layer may or may not be covered by a pixilated electrochromic layer throughout; or the electrochromic layer may be located to only a portion of the insulating layer, which portion may be centered on the insulating layer or arranged off-center.

Furthermore, the surface of the insulating layer and/or the surface of the pixilated electrochromic layer may or may not be covered by a continuous layer of electrolyte throughout the respective surface(s), or the electrochromic layer may be located to only a portion of the insulating layer and/or the pixilated electrochromic layer, which portion may be centered on the insulating layer and/or pixilated electrochromic layer, or arranged off-center.

Additionally, the surface of the insulating layer and/or the surface of the pixilated electrochromic layer and/or the surface of the electrolyte layer may or may not be covered by respective motif electrode segment(s) and background electrode segment(s) throughout the respective surface(s), or the electrode segment(s) may be located to only a portion of the insulating layer and/or the pixilated electrochromic layer and/or the electrolyte layer, which portion may be centered on the insulating layer and/or pixilated electrochromic layer and/or the electrolyte layer, or arranged off-center.

However, all of the pixels of the electrochromic layer, which should be part of the motif area have to be electronically connected to a motif electrode segment, via an electronic conductor. In other words, the pixels of the electrochromic layer that should be part of the motif area should each cover a respective passage in the insulating layer, which passage comprises a conductor. Further, on the reverse side of the insulating layer each of said respective passages are covered by a portion of a motif electrode segment. Consequently, all pixels of the electrochromic layer that should be part of the motif area may be provided with a first potential, or motif potential, via a respective motif electrode segment and electronic conductor.

Further, an appropriate number of the remaining pixels of the electrochromic layer are part of the background area and these pixels hare connected to a background electrode segment, via an electronic conductor. In other words, the pixels of the electrochromic layer that should be part of the background area should each cover a respective passage in the insulating layer, which passage comprises a conductor. Further, on the reverse side of the insulating layer each of said respective passages are covered by a portion of a background electrode segment. Consequently, all pixels of the electrochromic layer that should be part of the motif area may be provided with a second potential, or background potential, via a respective background electrode segment and electronic conductor.

Furthermore, one or more continuous electrolyte layers are arranged such that pixels of the electrochromic layer that should be part of the motif area is ionically connected via a respective electrolyte layer to an appropriate number of pixels connected to a background electrode segment. In other words, at least a portion of the motif pixels are ionically connected to an appropriate number of pixels connected to a background electrode segment. The number of pixels connected to a background electrode segment is appropriate as long as the number of pixels is sufficient for providing the necessary electrochemical reaction of said portion of the motif pixels, which electrochemical reaction changes the color of the motif pixels to a desired or visual detectable extent. It is understood that the ionic connection of the pixels by means of one or more electrolyte layers on the front side, is independent from the connection of the pixels by means of electrode segments of the reverse side.

The requirement for achieving the desired color change of a motif pixel is that that pixel receives a first potential, and that a background pixel (to which said motif pixel is ionically connected by an electrolyte) receives a second potential, which is sufficiently different from said first potential, so that the color changing electrochemical reaction progresses at a desired rate. Additionally, the total volume of background pixels ionically connected to a total volume of motif pixels by means of one continuous electrolyte layer, is preferably sufficient for providing the desired color changing electrochemical reaction of all the motif pixels in total volume of motif pixel, wherein each of the background pixels is connected to a background electrode segment, and each motif pixel is connected to a motif electrode segment. If the total volume of background pixels is insufficient, all the motif pixels ionically connected this electrolyte layer might not be color changed to a desired extent. The larger this total volume of background pixels is, the smaller the risk of e.g. overoxidation one or more background pixels. It is understood that all of the background electrode pixels of said total volume of background pixels may be connected to the same background electrode segment, or they may be connected to electronically separated background electrode segments.

Further, it is understood that all of the motif electrode pixels of said total volume of motif pixels may be connected to the same motif electrode segment, or they may be connected to electronically separated motif electrode segments.

It is to be understood that the switching time or the color change of a pixel element is generally affected by e.g.:
- the mobility of ions in the electrolyte, the higher the mobility the shorter the switching time;
- the magnitude of the ionic current in the electrolyte, which is determined both by the ion mobility in the electrolyte as well as the electrolyte volume and the ion concentration in the electrolyte;
- the choice of electrochemically active and/or electrochromic material;
- the volume of the electrochemically active and/or electrochromic material that needs to be reacted in order to alter the color of the electrochromic material;
- the amplitude of the applied voltage; the higher the voltage the shorter the switching time, and vice versa.

The architecture of the fixed image display device enables a versatile fixed image display device, wherein the fixed image to be displayed by the display is determined by the patterned motif electrode layer, which layer preferably extends across at least two rows and two columns of the matrix of pixel elements in order to form at least a portion of the fixed image. Hence, various fixed image designs may advantageously be provided by changing the design, or pattern, of the patterned electrode layer.

For example, the pixel elements of the electrochromic layer, i.e. the motif pixel elements, are arranged to switch coloring state upon activation of the display, such that the fixed image is defined by the switched pixels in relation to the pixel elements of the counter electrode layer i.e. the background pixel elements.

According to one embodiment, all materials or all layers forming the fixed image display device are flexible, such that the resulting fixed image display device is also flexible, and/or rollable. In other words it may be repeatedly bent or rolled without breaking. For example, when bending or rolling the device the radius of curvature may be less than e.g. 75 % or 50% of the length of the bent side of the display device, or of the length of the bent side of the display area of the display device.

The shape of the pixel elements may be e.g. square, or rectangular, or any other suitable form, having e.g. rounded corners. The pixel elements may further be arranged in an orthogonal, or e.g. skewed matrix having rows and columns which are tilted in relation to each other. For example, the matrix forms an m*n matrix, wherein m and n represents rows and columns, respectively, and wherein m and n, respectively, can be any positive number which is greater than or equal to two. According to an exemplifying embodiment, the fixed image display device further comprises a transparent top layer which is arranged, in the viewing direction, in front of the pixel elements, wherein the top layer continuously covers the display area of the pixel device. The top layer advantageously protects the fixed image display device and improves its life span. The provision of a top layer may further facilitate efficient low-cost manufacturing wherein the top layer may be used as a carrier onto which the pixel layer is printed in the roll-to-roll process. In turn, the pixel layer may be made thinner, which improves switching properties of the display device.

The electrochromic layer is, according to one embodiment, transparent or semi-transparent, at least in one coloring state.

The insulating layer may be continuous throughout the display area of the device, and optionally be arranged in direct contact with motif and background electrodes, and comprise a plurality of passages which enable electronic connection between the patterned electrode layer and the electrolyte segments by means of electronic conductors arranged in the passages of said insulating layer. A continuous insulating layer allows for a durable and self-supporting fixed image display device and further facilitates manufacturing of the device, wherein the insulating layer may reduce crosstalk and/or interference between separate pixel elements and/or between the electrochromic layer and the patterned electrode layer.

The insulating layer may be self-supporting, it may have an essentially uniform thickness, it may be flexible, and/or continuous in relation to the display area of the fixed image display.

Generally, a number of electronic conductors are arranged in a respective passage of the insulating material, each conductor being electronically connect a portion of the motif electrode segment or a portion of the background electrode segment; as well as being connected to a respective pixel element of the electrochromic layer or to a respective pixel element of the counter electrode layer.

According to various exemplifying embodiments of the insulating layer, it comprises a flexible plastic film with an essentially uniform thickness between 5 and 1000 µm, or between 10 and 500 µm, or between 10 and 250 µm. The insultaing layer may also, according to various exemplifying embodiments be formed of or comprise a lacquer and/or varnish, which may be provided by printing. Additionally, the insulating layer may also be provided as a grid, e.g. by means of intersecting lines. According to further embodiments of the invention the thickness of the insulating layer is between 20 µm and 150 µm. According to some examples the thickness of the insulating layer is at least 10 µm, or at least 20 µm, or at least 50 urn. Further, the thickness of the insulating layer is at most 200 µm, or at most 150 µm, or at most 100 µm. Additionally, the thickness of the insulating layer may be within an interval of any of these higher and lower limits, such as 10 µm to 150 µm or 50 µm to 150 µm.

An opaque insulating layer may be achieved either by selecting a substrate that in it self is opaque, or by coating or laminating the substrate with an opaque material, such as an opaque varnish or ink, or an opaque foil.

Generally, the electrochromic layer and/or the counter electrode layer and/or the at least one motif electrode segment and/or the at least one background electrode segment may be arranged in direct physical contact with the insulating layer.

The electrochromic layer and/or the counter electrode layer may or may not be printed, deposited, or arranged by other means, directly on the insulating layer surface.

The motif electrode layer and/or the background electrode layer may, according to various embodiments, comprise carbon, electronically conductive polymer, or metal, and/or combinations thereof. For example, carbon paste which may be printed using low-cost printing techniques and equipment may be utilized.

A small fixed image device comprising a relatively low number of pixel elements, such as 2*2, 3*3, or 2*3 matrices of pixel elements, may be provided. Larger display device may comprise rows and/or columns of 10-100, and/or 100-1000, and/or 1000-10000, and/or more than 10000 pixel elements each.

According to an exemplifying embodiment, the motif pixel elements of the fixed image display device comprises a plurality of separate subsets of pixels, and a plurality of patterned continuous motif electrode segments may be provided, each being electronically connected to a respective subset of the first set of pixel elements.

The provided electrolyte may be a solidifying or a solidifiable electrolyte which may be solidified upon e.g. thermal or UV curing. During a self-alignment phase, the electrolyte is still not solidified or only partially solidified.

### Definitions

Dynamic image display device: a dynamic image display device comprises control means for displaying different or moving images, such that the displayed image may be changed.

Fixed image display: a fixed image display device is not arranged to display different or moving images. Instead, the fixed image display device is arranged to, upon activation, display one single fixed image. This single fixed image may alternately be turned on and off, e.g. by means of a control electronics. Additionally, several fixed image display devices may be arranged side by side, which display devices may be turned on and off independently off each other. However, none of the displays are arranged to display different or moving images.

Off-state: the off state or the in-active state or the non active state of the display device is when the power is turned off, and all pixels of the display have substantially the same color and appearance. I.e. a voltage applied across the display, if any, is in the off state not sufficiently high to cause a change in color of the pixels of the display. Further, this color of the pixels is referred to as the background color of the display.

On-state: the on state or the active state of the device is when the power is turned on and a subset of the pixels of the display has a color which is substantially different from the background color of the display. This color is referred to as the motif color of the display. The color change of the pixels is initiated and progressed by a voltage difference being between the motif layer and the background layer.

Motif / Background: In order to facilitate the reading of the text herein the motif area is defined as the structure or structures that is/are built up by, or comprises, pixels substantially changing color in response to a voltage being applied to the display device, i.e. pixels electrically connected to an background electrode segment. Correspondingly, the background area is defined as the area or areas that is/are built up by, or comprises, pixels which color state remains substantially the same when a voltage is applied to the display device. Moreover, if one set of pixels darkens when the voltage is applied and another set of pixels is bleached, the motif pixels are the ones which color change is the most noticeable. Consequently, if the electrochromic material darkens when a voltage is applied thereto and the other pixels remain substantially the same, and there is a desire to illustrate e.g. a motif like the moon on a dark sky - the motif would be the sky, and the moon would be the background. In this particular example, the pixels constituting the sky are connected to one or more patterned electrode layers, while the pixels constituting the moon are not.

Provided there are more than one patterned electrode layer, different potentials may be applied to different patterned electrode layers and thereby giving raise to a varying color and/or contrast changing rate for different sets of pixels, i.e. causing a difference in color, such as the lightness (brightness) and/or color tone, between pixels being connected to different patterned electrode layers.

Display area: the display device is arranged to display, when activated, a predetermined fixed image in a display area of the display device, wherein the fixed image comprises at least one motif area and at least one background area which areas in combination define the fixed image visually perceived by the end user observing the display device

Active display: an active display is a display, which is arranged in its on-state.

Active pixel: an active pixel (also called motif pixel) is a pixel which is electronically connected to a motif electrode segment.

Background pixel: a background pixel is a pixel which is electronically connected to a background electrode segment.

Pixelated: an image that is built up by a number of pixels, which pixels may or may not have the same shape, is referred to as being pixelated. According to one embodiment, all pixels have substantially the same shape and are ordered in a repeating manner, such that the same shape occurs according to a predetermined pattern. Alternatively, the pixels have varying shapes but are ordered in a repeating manner, such that the same shape occurs according to a predetermined pattern.

Lateral configuration: two layers having lateral configuration are arranged spatially separated from and adjacent to each other, and the surface normal of the respective two layers are parallel or substantially parallel with each other.

Vertical configuration: two layers having a vertical configuration are arranged in a stacked or sandwiched configuration.

Non-active display: a non-active display is a display which is arranged in its off state.

Layer: according to one embodiment, the fixed image display device has a laminate structure and consists of "layers" of different materials. These layers can be continuous and/or patterned, and can be applied to each other (self-supporting device) or to a support or carrier (supported device). These terms, self-supporting/supported, may also be used for a separate layer. A self-supporting layer is a layer which may be handled on its own and e.g. mounted in a printing machine, without collapsing and without the need of additional supporting layers. Furthermore, the term layer may encompass all of the same material in the same plane, regardless whether this material is patterned or interrupted in such a way as to form discontinuous "islands" in the plane.

Insulating layer: the insulating layer preferably comprises plastic or is formed of a layer comprising plastic, a plastic insulating layer, a plastic film or plastic foil such as a polyester foil. As for the plastic insulating layer or the insulating layer comprising plastic, it may involve e.g. films, foaming films or laminated films thereof comprising, for example, polyolefin such as polyethylene, polypropylene or the like; polyester such as polyethylene terephthalate, polyethylene naphthalate, polybutylene terephthalate or the like; polyvinyl chloride, polystyrene, polyurethane, polycarbonate, polyamide, polyimide, poly methyl methacrylate, polybutene, polybutadiene, poly methyl pentene, ethylene-vinyl acetate copolymer, ethylene (meth) acrylic copolymer, ethylene (meth) acrylate copolymer, ABS resin, ionomer resin or the like, but is not limited to theses examples. Also, as for layers, commercial films can be used, and films formed by a cast film process using a process material may also be used.

For example, the display device may comprise a continuous layer of insulating material forming the insulating layer of at least some of said plurality of pixel elements. In other words, the insulation layer of several pixel elements may each be a separate portion of a continuous insulating layer.

Electrochromic: An electrochromic material(s) may be organic or inorganic, low molecular or polymeric. Such an electrochromic layer, independent of whether it is composed of one material or is an ensemble of more than one material, combines the following properties: at least one material is electrically conducting, i.e. electronically and/or ionically conducting, in at least one oxidation state, and at least one material is electrochromic, i.e. exhibits color change as a result of electrochemical redox reactions within the material. Optionally, the electrochromic layer may comprise an electrochemically active material.

Electrochemically active: an "electrochemically active" layer according to the present invention is a piece of a material having an electronic conductivity that can be electrochemically altered through change of the redox state of said material. Normally, at least a portion of an electrochemically active element is in ionic contact with an electrolyte, and the electrochemically active element may furthermore be integrated with one or more electrodes, where said electrodes are being composed of the same or different materials as the electrochemically active element. The electrode may also be arranged on top of said electrochemically active material.

Coloring state/change: when reference is made to "coloring state/change" or color change, this is also meant to include changes in optical density or reflectance, so that "coloring change" or "coloring state" for example takes into account changes, or intermediate states, from blue to red, blue to colorless, colorless to blue, dark green to light green, grey to white or dark grey to light grey alike.

Opaque: a layer is opaque if the transmission there through is less than 20 %, or less than 10 %, or less than 5 %, or less than 1 %.

Electrochemically active region: In relation to this invention the electrochemically active region of a pixel element may be defined by the interface between the electrolyte segment and the associated pixel portion of the electrochemically active pixel layer.

In optional embodiments of the fixed image display device, electrodes, such as the motif electrode segment, and/or the background electrode segment, may comprise an electronically conducting material capable of conducting electrons, such as electronically conductive polymers, for example PEDOT:PSS (poly(3,4-ethylenedioxythiophene) poly(styrene sulfonate)), carbon, inert metals or electrochemically inert metals or materials such as gold, titanium, platinum, graphite, graphene, noble metals and inert metals, or other conducting material which may be suitable for being in contact with electrochemically active layers, or combinations of such electron conductive materials. Normally, conducting materials suitable for being in contact with electrochemically active layers are inert such that they do not give rise to substantial electrochemical reactions. These materials may e.g. be provided as an ink or paste which may be arranged in passages or vias during a manufacturing, or pre-manufacturing, process.

Substantially the same colour: that two items have "substantial the same color", means a difference in color between them that is less visible for a human eye, or a difference in contrast of less than 5 when measured according to CIE (Commision Internationale d'Eclairage) LAB. According to one example an unswitched pixel has a LAB value of about 65 and a completely switched a LAB value about 45, which represents a substantial change in color. On the other hand, two pixels having substantially the same color may have a LAB value of 65 and 68, respectively, or 45 and 42, respectively.

Direct physical contact: Direct physical contact (common interface) between two phases that allows for the exchange of charges through the interface. Charge exchange through the interface can comprise transfer of electrons between electronically conducting phases, transfer of ions between ionically conducting phases, or conversion between electronic current and ionic current by means of electrochemistry at an interface between for example counter electrode and electrolyte or an interface between electrolyte and electrochromic layer, or material, or by occurrence of capacitive currents due to the charging of the Helmholtz layer at such an interface. When at least one insulating material is in direct physical contact with another material, charges may normally not be transferred through the common interface into the insulating material to any substantive extent, however the two materials which as in direct physical contact with each other do have a common interface.

Arranged on: when a first item is "arranged on" a second item the two items may or may not be in direct physical contact with each other. When a first item is "arranged directly on" a second item the two items are in direct physical contact with each other. When a first item is "arranged on" or "arranged directly on" a second item the first item may cover all or only a portion of the second item.

To the side of: a first item is arranged to the side of a second item not only if the items are arranged in the same mathematical plane, but also if they are arranged in different mathematical planes. In other words, if a first item is arranged directly on a substrate, the second item may be arranged to the side of the first item even if there are additional separating layers arranged between the second item and the substrate, such that the second item is not arranged in the same mathematical plane as the first item. Further, when a first item is arranged to the side of a second item, the second item normally neither covers, nor is covered by, the first item as seen along a viewing direction of the device. When first item is arranged to the side of a second item, the two items may be arranged in the same or substantially the same mathematical plane.

Spatially separated: when two items are spatially separated from each other these items are not in direct physical contact with each other.

Electronically connected: a first and a second material or item are electronically connected, i.e. in electronic contact with each other, when electrons may be transported from the first material/feature at least up to the second material/feature, and/or vice versa. A first and a second material/- feature are also electronically connected, i.e. in electronic contact with each other, when electrons may be transported from the first material/feature up to, and into, the second material/feature, and/or vice versa. Hence, an electronic conductor may be in electronic contact with, or electronically connected to, an electrolyte. Two electronic conductors may also by in electronic contact with each other.

In direct electronic contact: a first and a second material/feature are in direct electronic contact with each other, when electrons may be transported along the first material/feature at least up to the interface between the first and the second materials/features, and/or vice versa.

In indirect electronic contact: a first and a second materials/features are in indirect electronic contact with each other, when electrons may be transported from the first material/feature, via a third or more material(s)/feature(s), at least up to the second material/feature; and/or from the second material/feature, via the third or more material(s)/feature(s), at least up to the first material/feature.

In other words, two materials may be in electronic contact with each other, or electronically connected to each other, e.g. by direct physical contact or via a third intermediate material. A layer of carbon in direct contact (common interface) with a first and a second electrochemically active layer is one example of a material which may provide electronic contact between the two electrochemically active layers. Furthermore, two materials may be electronically connected by being in direct electronic contact or by being in indirect electronic contact.

Ionically connected: a first and a second material are ionically connected when ions may be transported from the first material to the second material, and/or vice versa. In more detail, a first and a second material are ionically connected, or in direct ionic contact, when ions may be transported from the first material at least to the interface between the first and the second material, and/or vice versa.

Ionic contact between two elements is e.g. provided by at least one material being capable of transporting ions between the two elements. An electrolyte, in direct ionic contact (common interface) with an electrochemically active layer and a patterned electrode layer, is one example of a material which may provide ionic contact between the electrochemically active layer and the patterned electrode layer. The electrolyte may hence be referred to as being in ionic contact with, or ionically connected to, each one of the electrochemically active layer and the patterned electrode layer.

According to an embodiment of the fixed image display device, it may comprise, as electrochromic material and/or electrochemically active material, a polymer which is electronically conducting in at least one oxidation state, and optionally also comprises a polyanion compound.

Electrochromic and electrochemically active polymers for use in the fixed image display device of the present invention are for example selected from the group consisting of electrochromic polythiophenes, electrochromic polypyrroles, electrochromic polyanilines, electrochromic polyisothianaphthalenes, electrochromic polyphenylene vinylenes and copolymers thereof. In an embodiment, the electrochromic polymer is a homopolymer or copolymer of a 3,4-dialkoxythiophene, in which said two alkoxy groups may be the same or different or together represent an optionally substituted oxy-alkylene-oxy bridge. In yet an embodiment, the electrochromic polymer is a homopolymer or copolymer of a 3,4-dialkoxythiophene selected from the group consisting of poly(3,4-methylenedioxythiophene), poly(3,4-methylenedioxythiophene) derivatives, poly(3,4-ethylenedioxythiophene), poly(3,4-ethylenedioxythiophene) derivatives, poly(3,4-propylenedioxythiophene), poly(3,4-propylenedioxythiophene) derivatives, poly(3,4-butylenedioxythiophene), poly(3,4-butylenedioxythiophene) derivatives, and copolymers therewith. The polyanion compound is then preferably poly(styrene sulfonate).

As is readily appreciated by the skilled man, in alternative embodiments of the invention, the electrochromic material comprises any non-polymer material, combination of different non-polymer materials, or combination of polymer materials with non-polymer materials, which exhibit conductivity in at least one oxidation state as well as electrochromic behavior. For example, one could use a composite of an electronically conducting material and an electrochromic material, such as electronically conductive particles, such as indium tin oxide (ITO) or antimony tin oxide (ATO), with polymer or non-polymer electrochromic materials such as polyaniline, polypyrrole, polythiophene, nickel oxide, polyvinylferrocene, polyviologen, tungsten oxide, iridium oxide, molybdenum oxide and Prussian blue (ferric ferrocyanide). As non-limiting examples of electrochromic elements for use in the device of the invention, mention can be made of: a piece of PEDOT:PSS, being both conducting and electrochromic; a piece of PEDOT:PSS with Fe²⁺ /SCN-, PEDOT:PSS being conducting and electrochromic and Fe²⁺ /SCN-being an additional electrochromic component (see below); a piece composed of a continuous network of conducting ITO particles in an insulating polymeric matrix, in direct electronic contact with an electrochromic WO3-coating; a piece composed of a continuous network of conducting ITO particles in an insulating polymeric matrix, in contact with an electrochromic component dissolved in an electrolyte. As described above, a fixed image display device may comprise a further electrochromic material for realization of displays with more than one color. This further electrochromic material can be provided within the electrochromic pixel element or the solidified electrolyte, which then for example comprises an electrochromic redox system, such as the redox pair of colorless Fe²⁺ and SCN- ions on one hand, and of red Fe³⁺ (SCN)(H2O)₅ complex on the other. By way of further, non-limiting example, such materials may be selected from different phenazines such as DMPA - 5,10-dihydro-5,10-dimethylphenazine, DEPA - 5,10-dihydro-5,10-diethylphenazine and DOPA - 5,10-dihydro-5,10-dioctylphenazine, from TMPD - N,N,N',N'-tetramethylphenylenediamine, TMBZ - N,N,N',N'-tetramethylbenzidine, TTF - tetrathiafulvalene, phenanthroline-iron complexes, erioglaucin A, diphenylamines, p-ethoxychrysoidine, methylene blue, different indigos and phenosafranines, as well as mixtures thereof.

Solidified electrolyte: for the purposes of the invention, "solidified electrolyte" means an electrolyte, which at the temperatures at which it is used is sufficiently rigid that particles/flakes in the bulk therein are substantially immobilized by the high viscosity/rigidity of the electrolyte and that it does not flow or leak. In the preferred case, such an electrolyte has the proper rheological properties to allow for application of this material on a support in an integral sheet or in a pattern, for example by conventional printing methods. After deposition, the electrolyte formulation should solidify upon evaporation of solvent or because of a chemical cross-linking reaction, brought about by additional chemical reagents or by physical effect, such as irradiation by ultraviolet, infrared or microwave radiation, cooling or any other such. The solidified electrolyte may for example comprise an aqueous or organic solvent-containing gel, such as gelatine or a polymeric gel. However, solid polymeric electrolytes are also contemplated and fall within the scope of the present invention. Furthermore, the definition also encompasses liquid electrolyte solutions soaked into, or in any other way hosted by, an appropriate matrix material, such as a paper, a fabric or a porous polymer. In some embodiments of the invention, this material is in fact the support upon which the electrochromic device is arranged, so that the support forms an integral part of the operation of the electrochromic device.

The solidified electrolyte may comprise a binder. It is preferred that this binder have gelling properties. The binder is preferably selected from the group consisting of gelatine, a gelatine derivative, polyacrylic acid, polymethacrylic acid, poly(vinylpyrrolidone), polysaccharides, polyacrylamides, polyurethanes, polypropylene oxides, polyethylene oxides, poly(styrene sulphonic acid) and poly(vinyl alcohol), and salts and copolymers thereof; and may optionally be cross-linked. The solidified electrolyte preferably further comprises an ionic salt, preferably magnesium sulphate if the binder employed is gelatine. The solidified electrolyte preferably further contains a hygroscopic salt such as magnesium chloride to maintain the water content therein. The electrolyte may be formed by one of the materials listed above or by a combination of two or more of these materials. For example, the electrolyte has reological properties which makes it suitable for printing e.g. by ink-jet printing or by a roll-to-roll process. Regarding reological properties, electrolyte viscosity may be considered. Exemplifying intervals of electrolyte viscosity (mPas) for different printing methods are:
- Inkjet printing: 1-20
- Flexo printing: 20-400
- Screen printing: 1000-100000
- Offset printing: 1000-100000
- Gravure printing: 20-200

In summary, the material selection and the architectural configuration of the fixed image display device according to the present invention allows for a manufacturing process comprising conventional printing techniques. Such conventional printing techniques may encompass bar coating, screen printing, spin-coating, ink-jet printing, aerosol-jet printing, or any other such manufacturing procedure. The architecture of the fixed image display device also allows for use of manufacturing procedures that are easily scalable to larger scale manufacturing, which, in turn, allows for faster and low cost manufacturing, such as low-cost printing described above.

Generally, other objectives, features, and advantages of the present invention that will appear from the following detailed disclosure, from the attached dependent claims as well as from the drawings are equally possible within the scope of the invention.

### Brief Description of Drawings

Embodiments of the invention will now be described, by way of example, with reference to the accompanying drawings, wherein:
Fig. 1a is a schematic, partly exploded, perspective view of an embodiment of the flexible fixed image display according to the present invention.
Fig. 1b is a schematic cross-sectional view of an embodiment of the flexible fixed image display device according to the present invention.
Fig. 2 is schematic cross-sectional view of an embodiment of the flexible fixed image display device according to the present invention.
Fig. 3a is a schematic, partly exploded, perspective view of an embodiment of the flexible fixed image display according to the present invention.
Fig 3b is a schematic perspective top-view of the embodiment of the invention illustrated in Figure 3a.

It is understood that the drawings are not true to scale and, as is readily appreciated by a person skilled in the art, dimensions other than those illustrated in the drawings are equally possible within the scope of the invention.

### Detailed Description of Embodiments of the Invention

In the drawings, similar or equal elements are referred to by the same reference numerals.

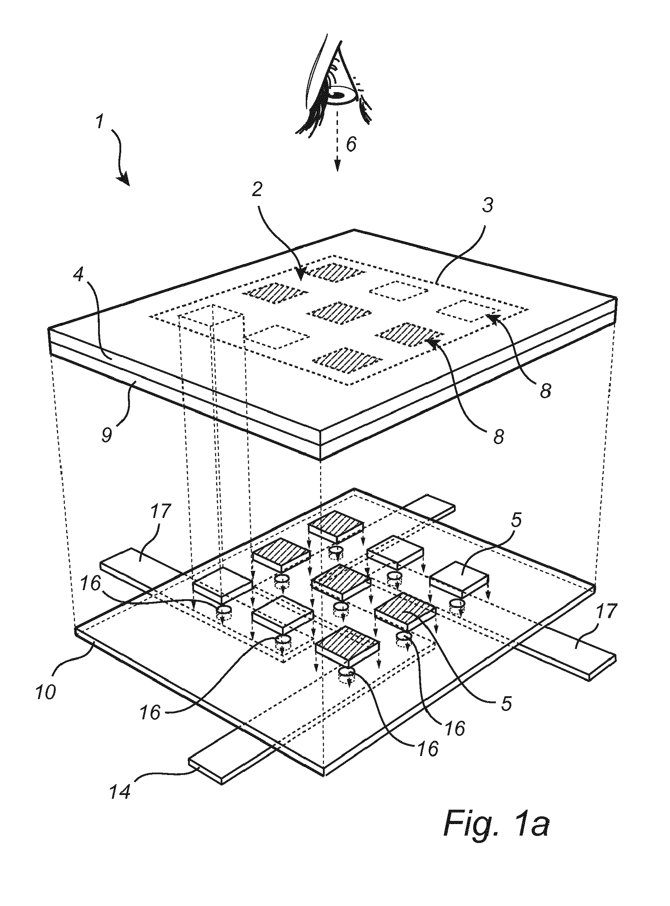

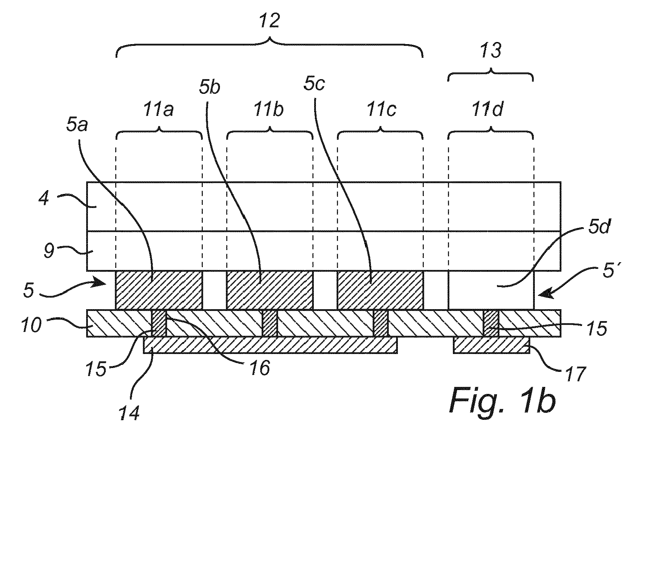

In Fig. 1a and Fig. 1b, schematic, partly exploded, perspective views of two exemplifying embodiments of the flexible fixed image display device 1 according to the present invention are shown. The device 1 comprises a display area 3 in which a predetermined fixed image 2 is arranged to appear for an end user observing the display device 1, e.g. in a viewing direction 6, when it is activated. The display area 3 is formed on, or in, a layer comprising an electrochromic and electrochemically active electrochromic layer 5 and an electronically conductive counter electrode layer 5', which layers are arranged in a matrix. The display area 3 further comprises a plurality of pixel portions which are arranged in a matrix, wherein transparent or semi-transparent electrolyte layer 9 is arranged in ionic contact with respective pixel portions. As illustrated, the matrix is formed of essentially orthogonal rows and columns of pixel portions. However, the matrix may e.g. comprise rows and/or columns which are angled in relation to each other, and/or rows and columns which are curved or arranged in a non symmetrical configuration in relation to each other.

Furthermore, each pixel element of the electrochromic layer 5 and the counter electrode layer 5' are electronically separated from all surrounding pixel elements. In other words, the geometrically separated interface regions between the pixel elements and the continuous electrolyte layer 9 determines the extension of the color change which is used to form the fixed image 2 to be output to the viewer. In practice, the interface region between the electrolyte 9 and the pixel electrode layer 5 and the counter electrode layer 5', respectively, also affects and restricts the electrochemical reaction of the pixel element during operation of the device 1, such that coloring of the pixel electrode layer 5 is confined to the interface regions.

When activated, the flexible fixed image display device 1 is arranged to display a predetermined fixed image 2 in a display area 3, where the fixed image 2 comprises at least one motif area and at least one background area.

The principal architecture of the display device 1 comprises an insulating layer 10, an electrolyte layer 9, an electrochromic layer 5, a counter electrode layer 5', a motif electrode segment 14 and a background electrode segment 17. In a normal viewing direction, the electrolyte layer 9 is arranged in front of the insulating layer 10, the electrochromic layer 5 and the counter electrode layer 5' are arranged between the electrolyte layer 9 and the insulating layer 10, respectively, while the motif electrode segment 14 and the background electrode segment 17 are arranged behind the insulating layer 10.

In particular, the electrolyte layer 9 is continuous throughout the display area 3 and comprises solidified electrolyte, the counter electrode layer 5' comprises electronically conductive material and the electrochromic layer 5 comprises electrochromic and electrochemically active organic polymer material(s), which are switchable between different visually detectable coloring states.

The electrochromic layer and the counter electrode layer are arranged in a lateral configuration and are in ionic contact with each other via the electrolyte layer 9. The color of the electrochromic layer 5 and the color of the counter electrode layer are perceived as the same or substantially the same when the materials are in their respective non-active state. Further, the electrochromic layer 5 and the counter electrode layer 5' are each arranged in a plurality of pixel elements having a matrix configuration, which pixel elements are spatially separated from each other and in ionic contact with the electrolyte layer 9.

The insulating layer 10 is opaque and provided with passages 16, where each passage 16 is provided with an electronic conductor 15.

Further, there are at least one continuous motif electrode segment 14 and one continuous background electrode segment 17. The continuous motif electrode segment 14 is electronically connected to at least two pixel elements of the electrochromic layer 5 via respective ones of said electronic conductors 15. The continuous background electrode segment is electronically connected to at least two pixel elements of said counter electrode layer 5' via respective ones of said electronic conductors 15.

When an electric potential difference (V) is applied between the electrochromic layer 5 and the counter electrode layer 5', the at least two pixel elements of the electrochromic layer 5 switch coloring state.

Hence, the patterning of the motif electrode segment 14, of which there may be more than one, is used for defining which pixel elements are being part of a first set of pixel elements which are arranged to form the motif area of the fixed image, and the patterning of the background electrode segment 17, of which there may be more than one, is used for defining which pixel elements are being part of a second set of pixel elements which are arranged to form the background area of the fixed image.

The first set of active pixel elements which form the motif area, in the following also referred to as the motif pixel elements, may be electronically connected to electronically separated motif electrode segments 14, each of which defines a portion of the complete fixed image to be outputted by the fixed image display device, wherein each patterned motif electrode layer 14 contacts a separate subset of pixel elements of the first set of pixel elements.

The second set of active pixel elements which form the background area, in the following also referred to as the background pixel elements, may be electronically connected to electronically separated background electrode segments 17, each of which defines a portion of the complete fixed image to be outputted by the fixed image display device, wherein each patterned motif electrode layer 17 contacts a separate subset of pixel elements of the second set of pixel elements.

As further illustrated in Fig. 1a, the fixed image display device 1 comprises a transparent top layer 4 which is arranged, in the viewing direction, in front of the electrolyte layer 9, and continuously covers the display area 3 of the pixel electrode. The top layer forms e.g. a protective cover for the pixel electrolyte layer 9. The top layer may also form a carrier device for the pixel electrode layer which facilitates manufacturing, such as low-cost printing, wherein the electrolyte layer, such as a thin and/or non-self-supportive electrolyte layer, may be printed onto a back side surface of the top layer 4. The top layer may have a uniform thickness and may be formed of a transparent plastic layer.

The fixed image display device 1 further comprises a continuous insulating layer 10 arranged between the electrochromic/counter electrode layer 5, 5' and motif/background electrode segment 14, 17. The insulating layer further comprises a plurality of passages 16 which enable electronic connection between the electrochromic layer 5 and the motif electrode 14, as well as between the counter electrode layer 5' and the background electrode segment 17. For example, the passages 16 are prefabricated in a separate process in relation to the manufacturing of the fixed image display device. The passages 16 may advantageously be fabricated using laser drilling techniques.

The at least one motif electrode segment 14 and the at least one background electrode segment 17 may be provided, e.g. by printing, on a back side of the insulating layer 10.

In Fig. 1b, a schematic cross-sectional view of an embodiment of the flexible fixed image display device 1 is illustrated, which display device 1 is arranged in a similar manner as described with reference to Fig 1a, if not stated or depicted otherwise. The motif electrode segment 14 is printed on the back side surface of the insulating layer 10 and contacts the motif pixel elements 11a, 11b, and 11c, belonging to the first set of pixel elements 12, via electronic conductors 15, which are arranged in passages 16 of said insulating layer. Further, a background electrode segment 17 is printed on the back side surface of the insulating layer 10 and contacts the background pixel elements 11d, belonging to the second set of pixel elements 13, via an electronic conductor 15, which is arranged in passages 16 of said insulating layer. In other words, the motif electrode segment 14 is arranged to only contact the predetermined motif pixel elements which form the motif area of the fixed image; and the background electrode segment 17 is arranged to only contact the predetermined background pixel elements which form the background area of the fixed image

Furthermore, in Figure 1b the fixed image display device is illustrated in an activated state, wherein the respective pixel portions 8a, 8b, 8c of the electrochromic pixel electrode layer 5 associated with motif pixel elements 11a, 11b, 11c have switched their coloring state to a darker color compared to the background pixel element 11d. For example, the motif pixel elements are activated simultaneously by activation of a potential difference between the motif electrode segment 14 and the background electrode segment 17. For example, the applied potential difference drives a current which generates an electrochemical redox reaction, such as oxidation or reduction, in the motif pixel elements such that the at least the pixels elements 8a, 8b, 8c of the electrochromic layer 5 switches coloring state. According to one embodiment the pixel elements 8a, 8b, 8c of the electrochromic layer 5 is switched to a darker color compared to the off state, and the pixel element 8d of the counter electrode layer is switched to a lighter color compared to the off state.

In the illustrated embodiment, the pixel electrode layer is formed of an electrochromic and electrically conductive polymer material, e.g. as described above, such as a flexible layer of PEDOT:PSS. Other material with similar properties and functions may also advantageously be utilized.

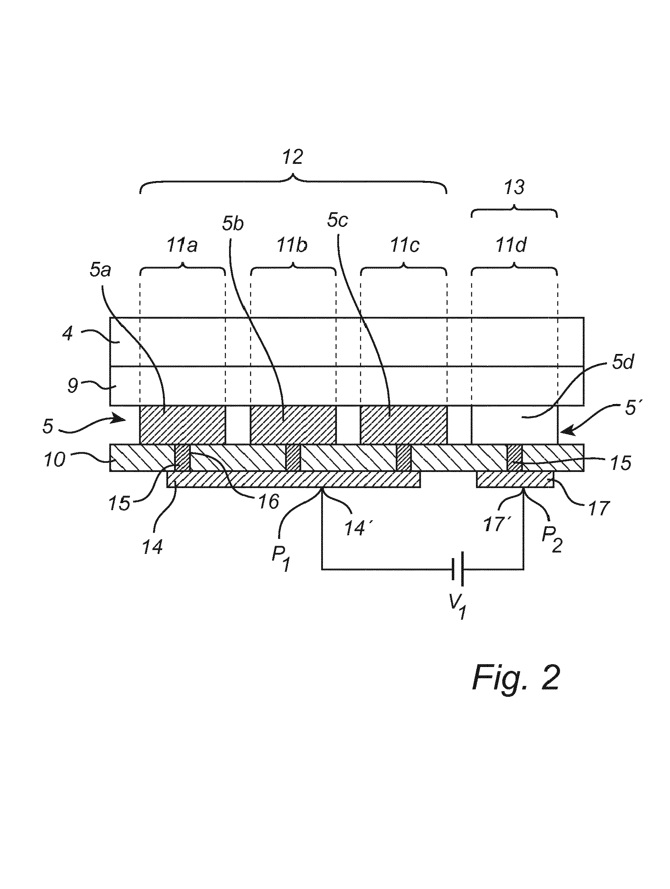

In Fig. 2 a schematic cross-sectional view of an exemplifying embodiments of the flexible fixed image display device 1, is illustrated, which display devices 1 are arranged in a similar manner as described with reference to Fig 1b, if not stated or depicted otherwise.

As illustrated in Fig. 2, the fixed image display devices 1 may be activated by application of a first potential P1 to a contact portion 14 of the motif electrode segment 14 and a second potential P2 to a contact portion of the background electrode segment 17, said second potential P2 being sufficiently different from said first potential P1 to cause an electrochemical reaction in the electrochromic layer progressing at a desired rate. Accroding to one embodiment, said potential difference is provided by means of an operating circuitry 18 comprising a control unit 19, and/or a power source 19', arranged to switch the motif pixels essentially simultaneously. For example, one common contact portion 14' of a motif electrode segment 14 is used for driving all motif pixel elements in the subset of pixel elements contacted by that specific motif electrode segment. As illustrated, upon activation of the display device, the pixel portions 8a, 8b, 8c corresponding to the active motif pixel elements switch their coloring state to a darker one. Pixel portion 8d corresponds to the background pixel element which in this case has been switched to a lighter color.

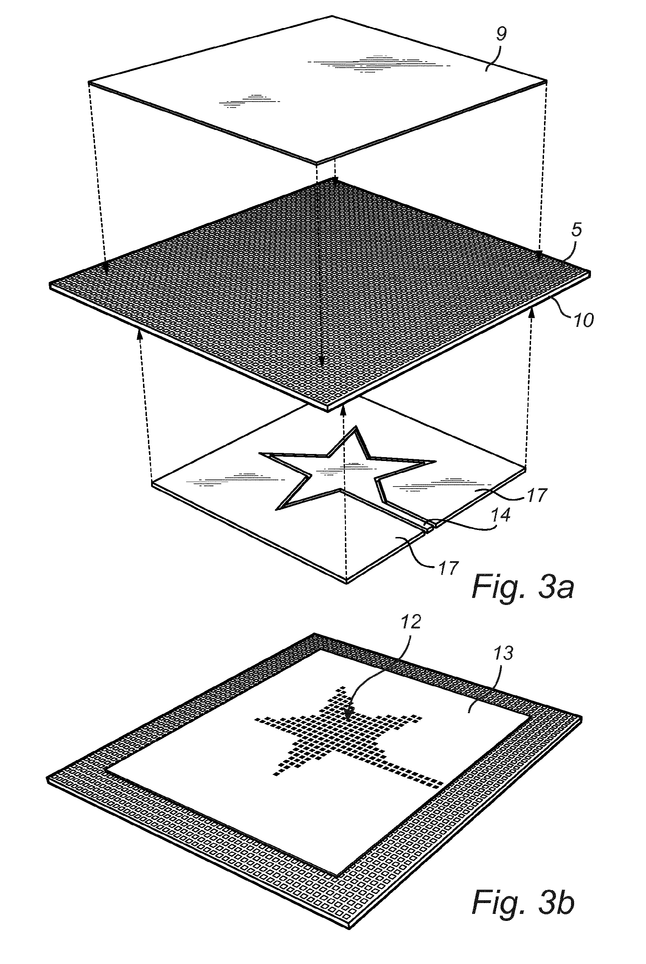

In Figs 3a-d one example of a display is illustrated, which display is arranged as described above, before any potential difference has been applied thereto. Figure 3a is a top view of the display, wherein a layer 5, 5' of electronically conductive and electrochromic material has been provided on top of a substrate 10. The layer 5, 5' is patterned into squares which are arranged in a matrix configuration comprising orthogonal lines and columns. The substrate comprises passages, each passage comprising an electronic conductor 15 in electronic contact with a respective one of said squares. A continuous electrolyte layer 9 is provided on top of the layer 5, 5' of electronically conductive and electrochromic material.

Figure 3b is a bottom view of the display, wherein a motif electrode segment 14 and a background electrode segment 17 is provided on the substrate 10, the segments are spatially and electronically separated from each other, and comprise electronically conducting material. Additionally, the motif electrode segment 14 is electronically connected the conductors 15 which it covers; and the background electrode segment 17 is in turn electronically connected to the conductors 15 which it covers.

Figure 3c illustrates at top view of the display after a potential difference has been applied between the motif electrode segment 14 and the background electrode segment 17. As can be seen in Figure 3c, the squares which are connected to the motif electrode segment 14 has darkened.

The method for manufacturing the flexible fixed image display device 1 according to the present invention comprises the steps of, in arbitrary order:
- providing an insulating layer 10.
- arranging an electrochromic layer 5 on a first side of said insulating layer 10, which electrochromic layer 5 comprises electrochromic and electrochemically active organic polymer material being switchable between different visually detectable states.
- arranging a counter electrode layer 5' on said first side of said insulating layer 10 to the side of and electronically separated from said electrochromic layer 5, which counter electrode layer 5'comprises electronically conductive material.
- arranging an electrolyte layer 9 on said first side of said insulating layer 10 such that said electrolyte layer 9 is continuous throughout said display area 3 and such that said electrochromic layer 5 and said counter electrode layer 5' are sandwiched between said electrolyte layer 5' and said insulating layer 10. In particular, the step of arranging the electrochromic layer 5 and the step of arranging the counter electrode layer 5' further comprises arranging the electrochromic layer 5 and the counter electrode layer 5', respectively, in a plurality of pixel elements, which pixel elements are spatially separated from each other. The step of providing said insulating layer 10, further comprises arranging passages 16 in the insulating layer 10 and arranging an electronic conductor 15 in said passages 16.

Moreover, the method of manufacturing the display device 1 further comprises the steps of:
- arranging on a second side of said insulating layer 10, which second side is opposite to the first side of the insulating layer 10, at least one motif electrode segment 14 and at least one background electrode segment 17, which motif and background segments 14, 17 are arranged electronically separated from each other.
- providing electronic contact between one of the at least one motif electrode segment 17 and at least two pixel elements of the electrochromic layer 5 via at least two of the electronic conductors 16, which are arranged in the passages 16 of the insulating layer 10.
- providing electronic contact between one of the at least one background electrode segment 17 and at least two pixel elements of the counter electrode layer 5' via at least two of the electronic conductors 17, which are arranged in the passages 16 of the insulating layer 10.

### EXAMPLE

According to one example:
- an insulating layer is provided with passages by means of laser drilling, the passages are arranged in orthogonal rows and columns and have a center-to-center distance of 1 mm, additionally each passage have a diameter of 70 µm;
- a conductor comprising electronically conductive carbon is arranged in each of said passages;
- a layer comprising PEDOT-PSS is printed on one side of said substrate, the PEDOT-PSS layer being divided into equilateral squares being 0.8 mm wide and having a center-to-center distance of 1 mm, wherein each square covers a respective one of said passages in the insulating layer;
- one rectangular and uniform layer of electrolyte is printed on top of the PEDOT-PSS layer, such that it covers the squares beneath it;
- a continuous layer comprising electronically conductive carbon is printed on the opposite side of the substrate, such that it in electronic contact with the respective connectors that are, in turn, connected to the selected squares that are covered by electrolyte;
- an outline of the desired motif is provided by removing some of the electronically conductive carbon, in more detail the electronically conductive carbon is removed in such a way that spatially separated segments of at least one motif electrode and at least one background electrode is provided. According to this example, only one motif electrode segment and one background electrode segments is provided, by means of removing electronically conductive carbon in one continuous line corresponding to the outline of the desired motif.

By this method a display as the one shown in Figures 3a-3b may be provided.

Operation of the device, by applying a first potential to of e.g. - 1.5 V to a contact portion of the motif electrode segment and a second potential of e.g. + 1.5 V to a contact portion of the background electrode segment, a switch to a darker color of pixels electronically connected to the motif electrode segment, and a switch to a lighter color of the pixels electronically connected to the background electrode is provided. As illustrated by the star-shaped pattern of Figure 3c.

It should be noted that the invention has mainly been described above with reference to a few embodiments. However, as is readily appreciated by a person skilled in the art, other embodiments than the ones disclosed above are equally possible within the scope of the invention, as defined by the appended claims. It is further noted that, in the claims, the word "comprising" does not exclude other elements or steps, and the indefinite article "a" or "an" does not exclude a plurality. The mere fact that certain features or steps are recited in mutually different dependent claims does not indicate that a combination of these features or steps cannot be used to an advantage.

## Claims

1. A flexible, fixed image display device (1) arranged to display, when activated, a predetermined fixed image (2) in a display area (3), the fixed image (2) comprising at least one motif area and at least one background area,
which display device comprises:
an insulating layer (10);
an electrolyte layer (9) comprising solidified electrolyte, which electrolyte layer (9) is continuous throughout the display area (3) and arranged, in a viewing direction, in front of said insulating layer (10);
an electrochromic layer (5) comprising electrochromic and electrochemically active organic polymer material being switchable between different visually detectable coloring states, and being arranged, in a viewing direction (6), between the electrolyte layer (9) and the insulating layer (10);
a counter electrode layer (5') comprising electronically conductive material, and being arranged, in a viewing direction (6), between the electrolyte layer (9) and the insulating layer (10),
which electrochromic layer (5) and counter electrode layer (5') are arranged in a lateral configuration, and in ionic contact with each other via said electrolyte layer (9) and wherein the color of the electrochromic layer (5), and the color of the counter electrode layer (5') are perceived as the same or substantially the same, when the materials are in their respective non-active state;
wherein,
said electrochromic layer (5) and said counter electrode layer (5') are each arranged in a plurality of pixel elements having a matrix configuration, which pixel elements are spatially separated from each other and in ionic contact with the electrolyte layer (9);
said insulating layer (10) is opaque and provided with passages (16), each passage being provided with an electronic conductor (15); and
wherein said fixed image display (1) device further comprises:
at least one continuous motif electrode segment (14) arranged, in the viewing direction, behind the insulating layer (10), and being electronically connected to at least two pixel elements of said electrochromic layer (5) via respective ones of said electronic conductors (15);
at least one continuous background electrode segment (17) arranged, in the viewing direction, behind the insulating layer (10), and being electronically connected to at least two pixel elements of said counter electrode layer (5') via respective ones of said electronic conductors (15); and wherein, upon application of an electric potential difference (V) between the electrochromic layer (5) and the counter electrode layer (5'), the at least two pixel elements of said electrochromic layer (5) switch coloring state.

2. A flexible, fixed image display device (1) according to claim 1, wherein the electrochromic layer (5) and the counter electrode layer (5') comprises, or consists of, the same material.

3. A fixed image display device (1) according to any one of the preceding claims, further comprising a transparent top layer (4) which is arranged, in the viewing direction (6), in front of the electrolyte layer (9),
wherein the top layer (4) continuously covers the display area (3)

4. A fixed image display device (1) according to any one of the preceding claims, wherein the electrochromic layer (5) and/or the counter electrode layer (5') is/are transparent or semi-transparent, at least in one coloring state.

5. A fixed image display device (1) according to any one of the preceding claims, further comprising a plurality of spatially separated motif electrode segments (14) comprising electronically conductive material, and each motif electrode segment (14) being arranged, in the viewing direction (6), behind the insulating layer (10), and being electronically connected to at least one pixel element of said electrochromic electrode layer (5) via at least one of said electronic conductors (15).

6. A fixed image display device (1) according to any one of the preceding claims, further comprising a plurality of spatially separated background electrode segments (17) comprising electronically conductive material, and each background electrode segment (17) being arranged, in the viewing direction (6), behind the insulating layer (10), and being electronically connected to at least two pixel elements of said counter electrode layer (5') via at least one of said electronic conductors (15).

7. A fixed image display device (1) according to any one of the preceding claims, wherein the insulating layer (10) comprises a flexible plastic film with an essentially uniform thickness between 5 and 1000 µm, or between 10 and 500 µm, or between 10 and 250 µm.

8. Method for manufacturing a flexible fixed image display device (1) arranged to display, when activated, a predetermined fixed image (2) in a display area (3), the fixed image comprising at least one motif area and at least one background area,
which method comprises the steps of, in arbitrary order:
- providing an opaque insulating layer (10);
- arranging an electrochromic layer (5) on a first side of said insulating layer (10), which electrochromic layer comprises electrochromic and electrochemically active organic polymer material being switchable between different visually detectable states;
- arranging a counter electrode layer (5') on said first side of said insulating layer (10) to the side of and electronically separated from said electrochromic layer (5), which counter electrode layer (5') comprises electronically conductive material;
- arranging an electrolyte layer (9) on said first side of said insulating layer (10) such that said electrolyte layer (9) is continuous throughout said display area (3) and such that said electrochromic layer (5) and said counter electrode layer (5') are sandwiched between said electrolyte layer (9) and said insulating layer (10);
wherein
- said step of arranging the electrochromic layer (5) and said step of arranging the counter electrode layer (5') further comprises arranging said electrochromic layer (5) and said counter electrode layer (5'), respectively, in a plurality of pixel elements, which pixel elements are spatially separated from each other;
- said step of providing said insulating layer (10), further comprises arranging passages (16) in said insulating layer (10) and arranging an electronic conductor (15) in said passages (16);
and
wherein the method of manufacturing said display device (1) further comprises the steps of:
- arranging on a second side of said insulating layer (10), which second side is opposite to said first side of said insulating layer (10), at least one motif electrode segment (14) and at least one background electrode segment (17), which motif and background segments (14, 17) are arranged electronically separated from each other;
- providing electronic contact between one of said at least one motif electrode segment (17) and at least two pixel elements of said electrochromic layer (5) via at least two of said electronic conductors (16) which are arranged in said passages (16) of said insulating layer (10); and
- providing electronic contact between one of said at least one background electrode segment (17) and at least two pixel elements of said counter electrode layer (5') via at least two of said electronic conductors (17) which are arranged in said passages (16) of said insulating layer (10).
